# EUROPÄISCHE PATENTSCHRIFT

(11) **EP 0 982 641 B1**
(45) Veröffentlichungstag und Bekanntmachung des Hinweises auf die Patenterteilung: **17.10.2007**
(21) Anmeldenummer: 99116239.7
(22) Anmeldetag: 17.08.1999
(51) Int. Cl.: G05B 19/042

(54) **Busanschaltung**
Bus interface
Interface de bus

(30) Priorität: 21.08.1998 DE 19838130
(43) Veröffentlichungstag der Anmeldung: 01.03.2000
(73) Patentinhaber: SIEMENS AKTIENGESELLSCHAFT, 80333 München (DE)
(72) Erfinder: Tretter, Albert, Dipl.-Ing.(FH), 92718 Schirmitz (DE); Plewa, Christian, Dipl.-Ing.(FH), 91056 Erlangen (DE)

(56) Entgegenhaltungen:
- DE-A1- 4 443 326
- "MC68360 - QUad Integrated Communications Controller User's Manual" [Online] 1. Januar 1995 (1995-01-01), , XP002366252 Gefunden im Internet: URL:http://www.freescale.com/files/product /doc/MC68360UMAD.pdf> [gefunden am 2006-02-01] * Seite I, Spalten 1-18 * * Seiten 3-1 - Seiten 3-4 * * Seiten 7-8 - Seiten 7-12 *
- "C167 Derivatives - 16 Bit CMOS Single-Chip Microcontrollers - User's Manual 03.96 Version 2.0" [Online] 31. März 1996 (1996-03-31), SIEMENS AG , MUNICH, GERMANY , XP002366251 Gefunden im Internet: URL:www.keil.com/dd/docs/datashts/infineon /d167r16f.pdf> [gefunden am 2006-02-01] * Seiten I-1 - Seiten 4-2 * * Seiten 13-1 - Seiten 13-5 * * Seiten 19-1 - Seiten 19-15 * * Seiten 23-1 - Seiten 23-20 *
- KATTWINKEL T: "16-BIT MICROCONTROLLER C167R WITH FULL-CAN MODULE: TUNING UP AUTOMOTIVE NETWORKS WITH THE CAN BUS" SIEMENS COMPONENTS, SIEMENS AKTIENGESELLSCHAFT, BERLIN,, DE, Bd. 30, Nr. 6, November 1995 (1995-11), Seiten 18-20, XP008004110 ISSN: 0173-1734
- "SPC3 Siemens PROFIBUS Controller" [Online] 10. Februar 1996 (1996-02-10), SIEMENS AG , XP002366253 Gefunden im Internet: URL:http://www.c-profibus.com.cn/Download/ SPC3%20manual.PDF> [gefunden am 2006-02-01] * Seite 1 - Seite 42 *
- ANONYMOUS: "MC68360: Quad Integrated Communications Controller (QUICC))"[Online] XP002366246 INTERNET CITATION Gefunden im Internet: URL:http://www.freescale.com/webapp/sps/si te/prod_summary.jsp?code=MC68360> [gefunden am 2006-02-01]

## Beschreibung

Die vorliegende Erfindung betrifft eine Busanschaltung, insbesondere eine Busanschaltung für einen Feldbus, insbesondere Profibus, wobei die Busanschaltung vorzugsweise als ASIC ausgeführt ist.

Die Dezentralisierung der Automatisierungstechnik hat seit der Einführung der Feldbusse einen enormen Fortschritt erzielt. Profibus-DP hat sich dabei als leistungsfähiger und vielseitiger Feldbus herauskristallisiert.

Da stetig mehr Funktionalität über den Feldbus übertragen wird, wurde der Profibus-DP unter dem Dach der Profibus-Nutzer-Organisation um die azyklischen Kommunikationsfunktionen (DPV1-Protokoll) erweitert. Dieser Trend muß auf der Geräteseite durch die entsprechende Integration der neuen Funktionalitäten unterstützt werden.

Bereits seit 1993 bietet die Siemens Aktiengesellschaft für die Anbindung an Profibus-DP die verschiedensten ASICS an. Zunehmende Kommunikationsanforderungen der Geräte und Automatisierungssysteme sowie die Notwendigkeit, die Feldbusankopplung zu optimieren, hat zur Entwicklung eines weiteren Profibus-ASICs geführt.

Dieser Profibus-ASIC enthält neben einem 6 KByte großen RAM als Hauptmerkmal einen integrierten 8031-Core, da in sehr vielen Peripheriegeräten nach wie vor 8 Bit Prozessoren speziell Derivate des Intel 8031 eingesetzt werden. Durch die Integration des 8031-Cores in den DP-Slave-Controller gelingt eine Optimierung der Hardwarekosten, die Reduzierung des Platzbedarfs einer Profibus-DP Slave-Anschaltung, einer Performance-Steigerung des Feldgerätes durch Kommunikationsvorverarbeitung sowie aufgrund der freien Programmierbarkeit eine Erhöhung des Einsetzspektrums.

Dabei ist das Einsatzgebiet nicht nur auf die klassische Domäne der Fertigungsindustrie beschränkt. Durch ein konsequentes Power Management in der 3,3V-Technologie wurde die Möglichkeit des Einsatzes auch im Feld der Verfahrenstechnik, dort in Verbindung mit Profibus-PA, erreicht. Für eine Anbindung der verschiedensten Geräteklassen an Profibus-DP stehen dem Gerätehersteller je nach Kommunikationsbedarf seiner Komponente abgestimmte Slave-ASICs zur Verfügung.

Ein bekannter ASIC wird bereits in einfachen Geräten mit einem geringen und fixen Kommunikationsbedarf, wie z.B. E/A-Komponenten oder Ventilinseln, eingesetzt.

Für intelligente, komplexe Geräte, die einen erhöhten und sich ändernden Kommunikationsbedarf haben, wie z.B. Antriebe oder Identifikationssysteme, steht ein weiterer, bekannter Slave-ASIC zur Verfügung, der neben dem DP-Protokoll, welches komplett integriert ist, mit einer zusätzlichen Software auch die azyklischen Kommunikationsfunktionen des DPV1-Protokolls unterstützt. Dieser Slave-ASIC verfügt darüber hinaus über ein 1,5 KByte großes RAM, über welches die Daten mit der Applikation ausgetauscht werden. Für die Ankopplung von Feldgeräten an Profibus-PA wurde bisher ein dritter Slave-ASIC genutzt.

In dem neuen Slave-ASIC wurden die unterschiedlichen Eigenschaften der einzelnen ASICs in einem Chip vereint. Ein Feldgeräteentwickler kann mit diesem Baustein ein weites Spektrum seiner Applikationen realisieren, ohne die Hardware oder Software austauschen zu müssen.

Ein wesentliches Merkmal der neuen Busanschaltung, die im folgenden synonym auch als neuer Slave-ASIC oder kurz als Baustein bezeichnet wird, besteht darin daß in einem Speicherbereich auf den zumindest eine hinsichtlich der Verarbeitungsfunktionalität einem Prozessor vergleichbare Funktionseinheit mit einem eigenen Programmspeicherraum Zugriff hat, Blöcke variabler Größe bildbar sind, wobei bei zunehmender Größe des ersten Block die Größe des zweiten Blocks abnimmt und umgekehrt und wobei der erste Block durch eine Umschaltung in den Programmspeicherraum der Funktionseinheit einblendbar ist. In der Beschreibung des Ausführungsbeispiels wird für die Funktionseinheit stets einen 8031-Core abgestellt.

In dem Manual "Siemens: 16 Bit Microcontrollers; C167 Derivatives" werden die im Titel bezeichneten Single-Chip Microcontroller beschrieben. In dem Manual "MC68360; QUad Integrated Communications Controller" wird ebenfalls die im Titel bezeichnete Funktionseinheit behandelt.

Weitere Merkmale, Vorteile und Anwendungsmöglichkeiten der Erfindung ergeben sich aus den Unteransprüchen, der nachfolgenden Beschreibung eines Ausführungsbeispiels anhand der Figuren und der Figuren selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Dabei zeigen
- FIG 1, 3 bis 5: ein Blockschaltbild der Busanschaltung
- FIG 2: eine schematische Darstellung des Speicherlayouts.

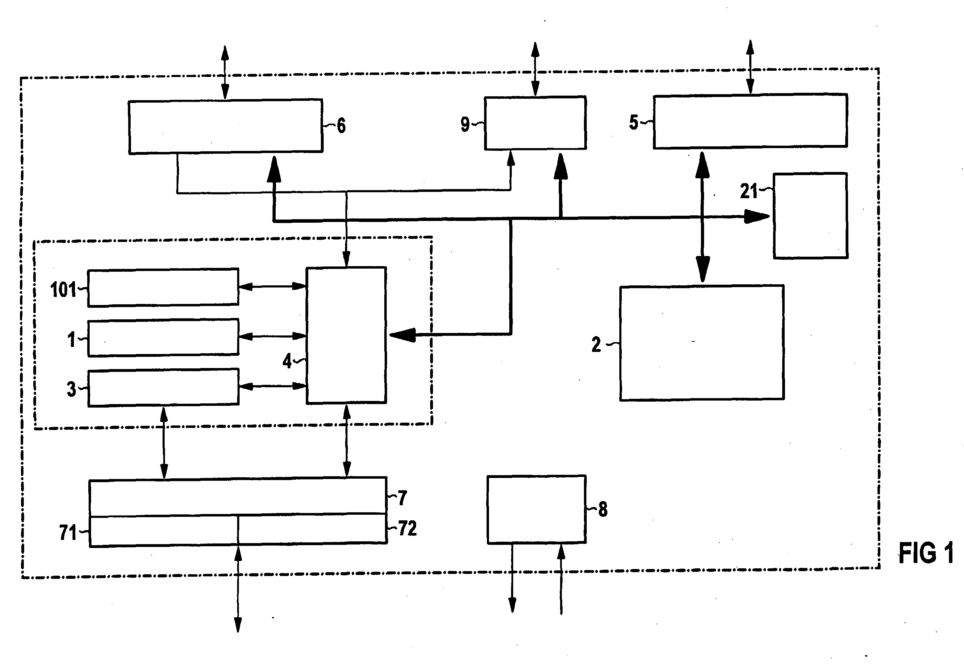

FIG 1 gibt in einem Blockschaltbild einen Überblick über die einzelnen Funktionsblöcke des neuen Slave-ASICs. Der neue Slave-ASIC enthält neben einem erweiterten "DP-Modul" des bereits bekannten Slave-ASICs mit der internen Bezeichnung SPC3 einen 8031-Core 2 inklusive Interface 5 und ein weiteres Interface 6, das entweder als Port-Erweiterung für den integrierten 8031-Core 2 oder zum Anschluß an einen externen Prozessor genutzt werden kann. Wie im SPC3 wurde auch in dem neuen Slave-ASIC das komplette DP Slave-Protokoll integriert. Die Schnittstelle zur Applikation bildet das 6 KByte große RAM 1, über das die Anwendung mit dem Kommunikationsteil kommuniziert. Das in der Praxis bewährte Anwender-Interface steht auch hier zur Verfügung. Durch diese Architektur wird die Entlastung der Applikation von allen zeitkritischen Kommunikationsfunktionen erreicht. Alle erforderlichen Timer für die Kommunikation sowie Überwachungsfunktionen für die Applikation wurden ebenfalls in den Baustein integriert. Wie aus dem Blockschaltbild ersichtlich, greifen auf dieses RAM 1 mehrere Instanzen und zwar ggf. ein externer Mikrocontroller, der interne 8031-Core 2 sowie interne Mikrosequenzer 3 zu. Die Zugriffe auf das RAM 1 werden dabei über einen transparenten Multi-Port-RAM-Controller 4 koordiniert.

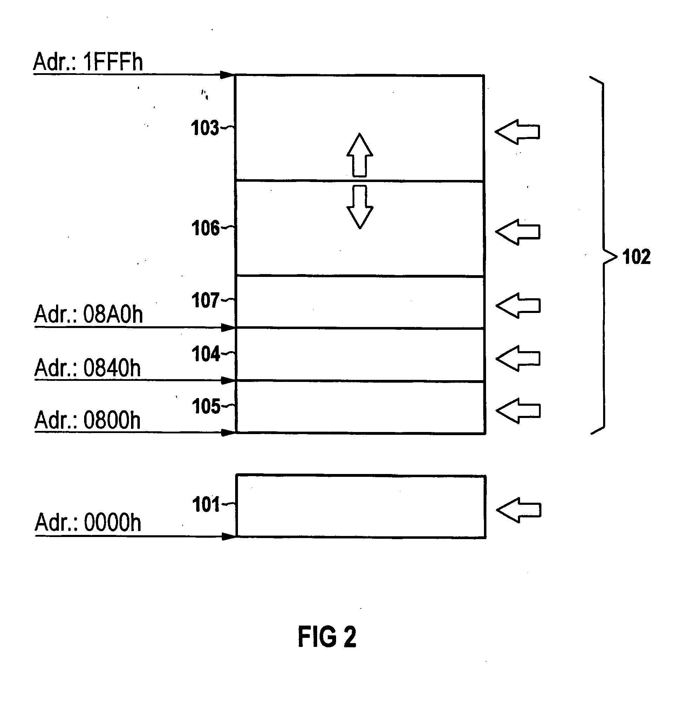

Die Aufteilung des RAMs 1 in unterschiedliche Bereiche zeigt FIG 2.

Gemäß FIG 2 umfaßt der Adreßbereich des neuen Slave-ASICs 8 KByte, wobei in den unteren 2 KByte 101 die Register liegen und darüber das 6 KByte große RAM 102. Abtrennbare Blöcke 103, deren Größe auf 0, 2, 3 oder 4 KByte einstellbar ist, sind als Code-Speicher des internen 8031-Cores 2 nutzbar. In dem RAM 102 finden sich neben den Parameterzellen 104 und internen Arbeitszellen 105 der gesamte Bereich 106, in dem die Kommunikationspuffer einzurichten sind, wobei auch dessen Größe einstellbar ist und zwar auf 6, 4, 3 oder 2 KByte. Zusätzlich befindet sich im RAM 102 noch ein Arbeitsbereich 107, der z.B. für einen Stack-Bereich, für Service Access Points, für verschiedene Queues oder temporäre Puffer zur Verfügung steht. In dem abtrennbaren Speicher 103, der zunächst als normales RAM ansprechbar ist, kann 8031-Code geladen werden. Durch eine Hardware-Umschaltung wird dieser Speicherbereich 103 dann in den Programmspeicherraum des internen 8031-Cores 2 eingeblendet.

Die Ankopplung an die Busphysik erfolgt mittels einer Physik-Unit 7, die neben dem asynchronen Interface 71 für die RS485-Schnittstelle zusätzlich eine synchrone Schnittstelle 72 umfaßt. Dieses Interface ermöglicht es, den Bus-ASIC über eine stromsparende Schnittstelle auch an die synchrone Übertragungstechnik von Profibus-PA anzukoppeln.

Ferner ist eine PLL und Clock-Unit 8 vorgesehen, wobei die Takterzeugung mittels der PLL und die Taktverteilung im Baustein mittels der Clock Unit erfolgt. Die integrierte PLL erzeugt die intern erforderlichen 48 MHz, so daß der sonst notwendige 48 MHz Quartzoszillator durch einen preiswerteren 12 MHz-Oszillator ersetzbar ist. Für den synchronen Betrieb ist die PLL abschaltbar, da in dieser Betriebsart die reduzierte Taktfrequenz von wahlweise 2, 4, 8 oder 16 MHz extern einzuspeisen ist.

Zum Anschluß SPI-kompatibler Komponenten wie E²PROMs oder A/D-Wandler ist eine synchrone serielle Schnittstelle 9, ein SSC-Interface als SSC-Modul 9 vorgesehen. Auf dieses Modul 9 kann sowohl der interne 8031-Core 2 als auch ein externer Mikrocontroller zugreifen. Das SSC-Modul 9 ist über Mode- und Control-Register flexibel konfigurierbar. Damit sind z.B. folgende Einstellungen möglich: Mit/ohne Parity, odd/even parity (wird automatisch generiert bzw. geprüft), einstellbare Taktrate von 46,8 kHz bis maximal 12 MHz sowie die Anzahl der zu sendenden bzw. zu empfangenden Bits von 1 Bit bis 8 Bit.

Der integrierte 8031-Core 2 ist kompatibel zu den Standard 8031-Derivaten. Dadurch sind Standardentwicklungsumgebungen sind Programmieren und Debuggen einsetzbar. Der 8031-Core 2 wird im 48 MHz-Betrieb mit der halben Taktrate, also mit 24 MHz, getaktet. Der integrierte 8031-Core 2 umfaßt bei dem neuen Slave-ASIC ein nicht dargestelltes 256 Byte großes "internes" RAM sowie den "Timer 2" der 8032-Derivate, so daß letztlich ein echter 8032-Controller zur Verfügung steht. Für den internen 8031-Core 2 wurde in den Slave-ASIC ferner ein 24 KByte großes Firmware ROM 21 integriert, wobei in diesem ROM folgende Funktionen hinterlegt sind: Lese- und Schreibfunktionen für ein SPI-kompatibles E²PROM, BootLoader für die Single-Chip Applikation sowie alle für die Realisierung eines "DP-Slaves" notwendigen Systemfunktionen.

Ferner ist vorgesehen, auch die azyklischen Kommunikationsfunktionen des DPV1-Protokolls in dem ROM 21 zu hinterlegen, so daß der neue Slave-ASIC in der Lage ist, den Applikationsprozessor komplett von Kommunikationsaufgaben zu entlasten. Dies kann ausgewertet werden, um entweder die Performance seines Feldgerätes zu steigern, oder um zur Kostenreduktion weniger leistungsfähigere und damit preiswertere Applikationsprozessoren einzusetzen. Die Auswahl der Funktionalität des ROMs 21 erfolgt über externe, nicht dargestellte Konfigurations-Pins.

Das 8031-I/O-Interface 5 stellt sämtliche Signale des 8031-Controllers zur Verfügung, um entsprechende Komponenten anzukoppeln. Das Interface 5 umfaßt vier Ports sowie Sonderfunktionen. Die Ports 0 und 2, die den Ports A bzw. C des DPC31 entsprechen, sind allerdings stets als Adreß- und Datenbus zu verwenden, wobei sich diese Festlegung mit Hinblick auf ein einfaches Debuggen mit Standard-ICE ergibt.

Das multifunktionale I/O-Interface 6 ermöglicht auf einfache Weise den Anschluß des Bausteins an einen externen Prozessor oder dient als Port-Erweiterung für den internen 8031-Core 2 zum direkten Anschluß von I/O-Signalen. Die Einstellung der Betriebsart erfolgt über Pins, wobei folgende Modi zur Auswahl stehen: Mikroprozessor Interface vom Typ Intel synchron/asynchron bzw. Mikroprozessor Interface vom Typ Motorola synchron/asynchron. Darüber hinaus läßt sich das I/O-Interface 6 als zusätzliches I/O-Interface mit bis zu 27 Ports aus Sicht des internen 8031-Cores 2 betreiben.

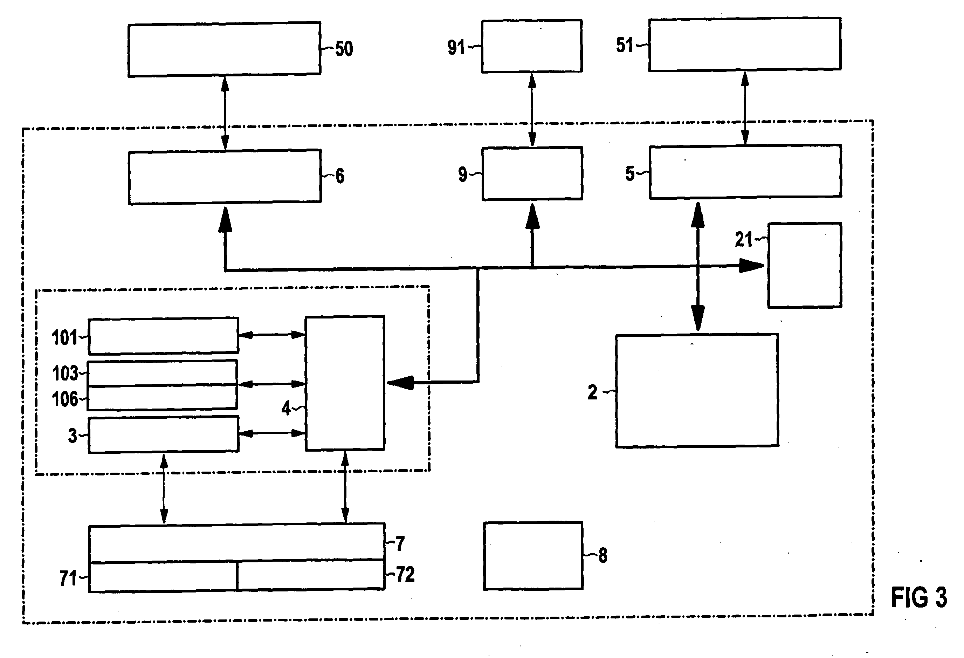

Der Baustein kann aufgrund des integrierten 8031-Cores 2 in einer Vielzahl von Anwendungen eingesetzt werden. Die wichtigsten Klassen von Applikationen, die mit diesem Baustein realisierbar sind, sollen nachstehend anhand der FIGen 3 bis 5, zunächst anhand von FIG 3, kurz beschrieben werden. Die komfortable Einbindung des Bausteins in die Applikation der Feldgeräte wird durch eine entsprechende Software-Schnittstelle sichergestellt. Die Software enthält neben den Initialisierungsroutinen Makros zum Betrieb der zyklischen DP-Slave-Funktionen sowie Funktionen für die Abwicklung der azyklischen Kommunikationsfunktionen des C1- und C2-Kanals von DPV1.

Wie bereits erwähnt, befinden sich im internen ROM 21 des Bausteins alle Funktionen, die für die Entwicklung einer "Single-Chip-Applikation" für Profibus-DP notwendig sind. Damit stellt sich der neue Baustein als ideale Alternative zu bekannten Bausteinen, die vom jeweiligen Mengengerüst zwar ausreichend, aber zu unflexibel sind, dar. Ein Anwender kann eine bis zu 4 KByte große Applikation schreiben, die in einem seriellen EEPROM 91 abgelegt wird. Dieses EEPROM 91 ist an das SSC Interface 9 anzuschließen. Der Baustein wird im Hochlauf den Inhalt des EEPROMs 91 an eine definierte Stelle im RAM 1 (in FIG 3 Bezugszeichen 103) laden, den geladenen Bereich dann als Code-RAM umschalten und die dort hinterlegte Applikation bearbeiten. Alle für den Betrieb des Bausteins notwendigen Funktionen befinden sich in dem internen ROM 21, so daß in dem externen seriellen EEPROM 91 "nur" der reine Applikationscode zu hinterlegen ist. Die Erstellung einer solchen Applikation wird durch entsprechende Software so vereinfacht, daß sie sich für einen Anwender identisch zum üblichen Erstellen einer Slave-Applikation darstellt. An den Baustein sind über das Interface 6 Aktoren oder Sensoren 50 bzw. über das Interface 5 Aktoren bzw. Sensoren 51 anschließbar.

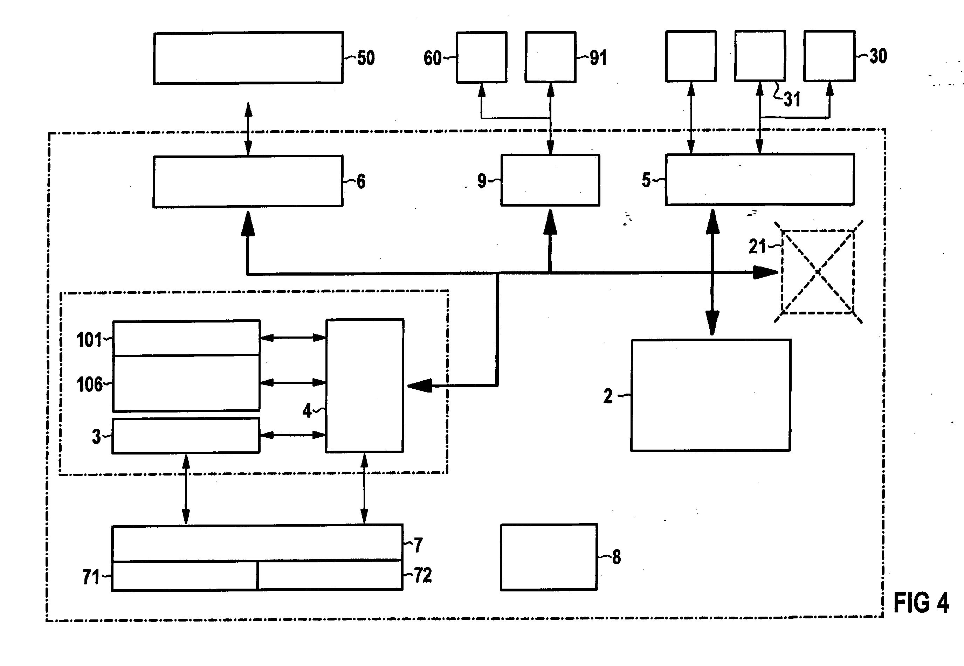

In einer weiteren Ausgestaltung ist der Baustein mit externem ROM/RAM betreibbar, wie in FIG 4 dargestellt. Bei dieser Variante wird das Standard 8031 Interface 5 als Adreß-, Datenbus-Interface genutzt, um daran ein ROM 30 bzw. RAM 31 anzukoppeln. In dem externen ROM 30 befindet sich neben der Applikations- auch eine Kommunikations-Firmware, die zur Applikation gelinkt wird. In dieser Konstellation ist das interne ROM 21 des integrierten 8031-Cores 2 quasi totgelegt, wie in der Darstellung gemäß FIG 4 angedeutet. Der interne 8031-Core 2 arbeitet zu jedem Zeitpunkt aus dem extern angeschlossenen ROM 30. Das SSC Modul 9 ist in dieser Betriebsart frei verwendbar und steht z.B. zum Anschluß eines seriellen EEPROMs 91 oder zum Anschluß eines A/D-Wandlers 60 zur Verfügung. Ähnliches gilt auch für das externe Mikroprozessor Interface 6, welches in diesem Fall sinnvollerweise als Port-Erweiterung des internen 8031-Cores 2 genutzt werden kann. Ein derartiger Betrieb des internen 8031-Cores 2 als Kommunikations- und Applikationsprozessor erspart den bisher extern eingesetzten Controller und ermöglicht zudem die Nutzung der erweiterten Kommunikationsfähigkeiten des Bausteins.

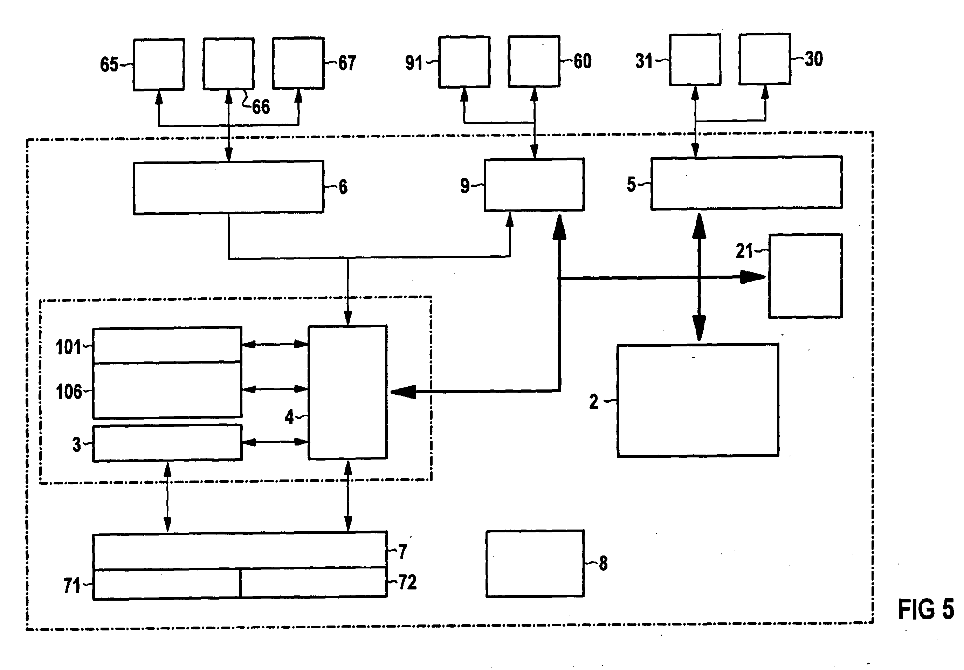

Grundsätzlich sind eine Vielzahl von Applikationen denkbar, bei denen die Performance eines 8031-Cores nicht ausreicht und/oder die zudem noch einen höheren Kommunikationsbedarf haben, als daß dieser von bekannten Bausteinen erfüllt werden könnte. Für diese Geräte bietet der neue Baustein die Möglichkeit, über das externe Mikroprozessor Interface 6 beliebige Host-Prozessoren an den Baustein anzuschließen, wie exemplarisch in FIG 5 dargestellt. Der Anwender hat lediglich bei der Dimensionierung der Hardware-Schnittstelle die spezifizierten Zeiten und Pegel zu beachten. Der externe Prozessor 65 "sieht" bezüglich der Kommunikation die gleiche Schnittstelle wie der integrierte 8031-Core 2. Auch in dieser Konstellation ist das SSC Modul 9 frei nutzbar. Der integrierte 8031-Core 2 kann, falls er nicht anderweitig genutzt wird, vom externen Prozessor 65 abgeschaltet werden. Der externe Prozessor 65 greift gegebenenfalls auf eigenes RAM 66 und auf ein eigenes ROM 67 zu.

In einer weiteren Ausgestaltung ist es vorgesehen, daß der interne 8031-Core 2 dafür genutzt wird, die kompletten azyklischen Kommunikatonsfunktionen zu bearbeiten, um dadurch dem Host-Prozessor diese Belastung abzunehmen. Zu diesem Zweck werden derartige Funktionen in das interne 24 KByte ROM 21 integriert. Über einen Queue-Mechanismus erfolgt dann nur noch der Austausch der reinen Produktivdienste, während die Protokollmaschinen vom internen 8031-Core 2 bearbeitet werden.

Der integrierte 8031-Core des Bausteins kann also beim Betrieb mit einem externen Prozessor für Vorverarbeitungszwecke genutzt werden oder die kompletten Kommunikationsaufgaben übernehmen.

Aufgrund der Kompatibilität des 8031-Cores zu den 8031-Derivaten kann zum Debuggen ein Standard-ICE verwendet werden, welcher über das 8031-I/O-Interface 5 mit dem Baustein verbunden wird. Über einen speziellen Pin des Bausteins wird der interne 8031-Core 2 für den Testbetrieb abgeschaltet und mit dem über das ICE angekoppelten 8031-Controller können nun alle Module ohne Einschränkung angesprochen und getestet werden. Als weitere Features des Bausteins sind zu nennen, daß der Baustein in einer 3,3V-Technologie realisiert ist, so daß auf einem Board eine entsprechende 3,3V-Spannungs-versorgung zu berücksichtigen ist. Um die Anpassung bei einem gemischten Design von 5V auf 3,3V möglichst einfach zu gestalten, wurden spezielle Pad-Zellen eingesetzt, die bezüglich der Eingänge 5V tolerant sind. Dies ermöglicht es, an den Eingangs-Pins des Bausteins direkt 5V anzulegen. Die Anpassung der Ausgangspegel von 3,3V auf 5V muß, falls nötig, extern durchgeführt werden. Für den Fall, daß ein Ausgang des Bausteins direkt auf einen TTL-Eingang verdrahtet ist, ist diese Anpassung nicht nötig, da der High-Pegel von TTL-Bausteinen bei 2V liegt und der Baustein selbst bis ca. 3,1V bei einer Spannungsversorgung mit 3,3V treibt. Falls aber eine Anpassung zu 5V CMOS durchgeführt werden muß, kann der fehlende Pegel durch einen Pull-up-Widerstand oder spezielle Treiberbausteine ausgeglichen werden.

Der Baustein ist in einem 100-Pin-PQFP-Gehäuse verpackt und kann in einer Umgebungstemperatur von -40 °C bis +85 °C betrieben werden. Aufgrund des integrierten Power Managements konnte die Verlustleistung erheblich reduziert werden. Der Baustein verbraucht bei Betrieb mit 48 MHz weniger als 200 mW. Entsprechend niedrige Werte wurden daher auch im synchronen Betrieb mit aktivem 8031-Core gemessen (5 mW bei 2 MHz; 10 MW bei 4 MHz).

## Patentansprüche

1. Busanschaltung mit einem in einem Baustein zusammengefassten Speicherbereich (1), einem Kommunikationsmodul sowie einer Funktionseinheit (2) mit einem eigenen Programmspeicherraum, die beide auf den selben Speicherbereich (1) zugreifen, wobei im Speicherbereich (1) Blöcke (103, 106) variabler Größe bildbar sind, wobei bei zunehmender Größe des ersten Block (103) die Größe des zweiten Blocks (106) abnimmt und umgekehrt, wobei in dem größenveränderlichen zweiten Block (106) Kommunikationspuffer einrichtbar sind, **dadurch gekennzeichnet, dass** der erste Block (103) durch eine Umschaltung in den Programmspeicherraum der Funktionseinheit (2) einblendbar ist.

2. Busanschaltung nach Anspruch 1, **dadurch gekennzeichnet, daß** zur Ankopplung an die Busphysik eine Physik-Unit (7) mit einem asynchronen Interface (71) und einer synchronen Schnittstelle (72) vorgesehen ist.

3. Busanschaltung nach Anspruch 1, **dadurch gekennzeichnet, daß** eine PLL und Clock-Unit 8 vorgesehen ist, wobei eine Takterzeugung mittels der PLL und eine Taktverteilung mittels der Clock-Unit erfolgt.

4. Busanschaltung nach Anspruch 1, **dadurch gekennzeichnet, daß** zum Anschluß SPI-kompatibler Komponenten eine über Mode- und Control-Register flexibel konfigurierbare synchrone serielle Schnittstelle (9) vorgesehen ist.

## Claims

1. Bus interface with a memory space (1) combined in a module, a communication module and a functional unit (2) with its own programme memory space, both of which access the same memory space (1), it being possible to form blocks (103, 106) of variable size in the memory space (1), with the size of the second block (106) decreasing as the size of the first block (103) increases and vice versa, it being possible to set up communication buffers in the size-variable second block (106),
**characterised in that**
the first block (103) can be overlaid by switching into the programme memory space of the functional unit (2).

2. Bus interface according to claim 1, **characterised in that** a physical unit (7) with an asynchronous interface (71) and a synchronous interface (72) is provided for coupling to the physical bus.

3. Bus interface according to claim 1, **characterised in that** a PLL and clock unit 8 are provided, with the clock being generated by means of the PLL and the clock being distributed by means of the clock unit.

4. Bus interface according to claim 1, **characterised in that** a synchronous serial interface (9) that can be configured in a flexible manner by way of mode and control registers is provided for connecting SPI compatible components.

## Revendications

1. Connexion de bus avec une zone de mémoire (1) réunie dans un composant, avec un module de communication ainsi qu'avec une unité fonctionnelle (2) qui a son propre espace de mémoire de programme et qui accède à la même zone de mémoire (1), des blocs (103, 106) de grandeur variable pouvant être formés dans la zone de mémoire (1), la grandeur du deuxième bloc (106) diminuant si la grandeur du premier bloc (103) augmente et inversement et des tampons de communication pouvant être créés dans le deuxième bloc (106) de grandeur variable, **caractérisée par le fait que** le premier bloc (103) peut être inséré par une commutation dans l'espace de mémoire de programme de l'unité fonctionnelle (2).

2. Connexion de bus selon la revendication 1, **caractérisée par le fait que**, pour le raccordement au bus physique, il est prévu une unité physique (7) avec une interface asynchrone (71) et avec une interface synchrone (72).

3. Connexion de bus selon la revendication 1, **caractérisée par le fait qu'**il est prévu une boucle à verrouillage de phase PLL et une unité d'horloge 8, une production d'horloge s'effectuant au moyen de la boucle à verrouillage de phase PLL et une distribution d'horloge s'effectuant au moyen de l'unité d'horloge.

4. Connexion de bus selon la revendication 1, **caractérisée par le fait que**, pour le raccordement de composants compatibles SPI, il est prévu une interface sérielle synchrone (9) configurable de manière flexible par l'intermédiaire de registres de mode et de contrôle.
